# EUROPÄISCHE PATENTSCHRIFT

(11) **EP 3 597 962 B1**
(45) Veröffentlichungstag und Bekanntmachung des Hinweises auf die Patenterteilung: **03.03.2021**
(21) Anmeldenummer: 19179321.5
(22) Anmeldetag: 11.06.2019
(51) Int. Cl.: F16G 1/16, F16G 5/14

(54) **RIEMEN UND SYSTEM**
BELT AND SYSTEM
COURROIE ET SYSTÈME

(30) Priorität: 19.07.2018 DE 102018212072
(43) Veröffentlichungstag der Anmeldung: 22.01.2020
(73) Patentinhaber: ContiTech Antriebssysteme GmbH, 30165 Hannover (DE)
(72) Erfinder: Huber, Tobias, 30165 Hannover (DE); Lüker, Svenja, 30165 Hannover (DE); Bartz, Stephan, 30165 Hannover (DE); Dietz, Sebastian, 30165 Hannover (DE)
(74) Vertreter: Continental Corporation

(56) Entgegenhaltungen:
- WO-A1-2010/040588
- WO-A1-2018/108381
- DE-A1- 2 216 091
- DE-A1-102008 024 952
- DE-A1-102015 108 079
- US-A1- 2016 313 186

## Beschreibung

Die Erfindung betrifft einen Riemen und ein System.

Riemen sind aus dem Stand der Technik bekannt. Riemen können zur Übertragung von Zugkräften und/oder zum Transport von Fördergut ausgebildet sein. Ein Riemen kann beispielsweise als ein endlicher Riemen mit zwei Enden ausgebildet sein. Oftmals ist ein Riemen jedoch als ein sogenannter endloser Riemen ausgebildet. Der Riemen kann dann beispielsweise ein Riemen für ein Riemengetriebe oder als ein Gurtband ausgebildet sein. Insbesondere wenn der Riemen für ein Riemengetriebe vorgesehen ist, kann der Riemen beispielsweise als ein Rippenriemen, ein Keilriemen oder ein Keilrippenriemen ausgebildet sein. Ist der Riemen hingegen als ein Gurtband ausgebildet, so kann der Riemen nach Art eines Bandes, also insbesondere als ein Förderband oder als ein Transportband, ausgebildet sein. Der Riemen kann also prinzipiell von einem kraftschlüssigen und/oder formschlüssigen Riementyp sein.

Ein Riemen weist ein oftmals aus Gummimaterial gebildetes Basismaterial auf, in das Festigkeitsträger eingebettet sind. Der Riemen ist dabei zumeist in einer Umfangsrichtung ringförmig umlaufend ausgebildet. Jeder Festigkeitsträger kann als ein durchgängiger, in Umfangsrichtung vorzugsweise schraubenförmig gebündelter Cord in das Basismaterial eingebettet sein. Der Cord kann von einem Metalldraht oder einem Kunststofffilament gebildet sein. Sofern der Cord mehrere Windungen aufweist, kann es vorgesehen sein, dass der Riemen nur einen Festigkeitsträger aufweist. Es ist jedoch auch möglich, dass der Riemen mehrere Festigkeitsträger aufweist. Jeder dieser Festigkeitsträger kann entsprechend der zuvor genannten Ausgestaltung ausgebildet sein.

Aufgrund der hohen Zugkräfte, die auf einen Riemen in Umfangsrichtung wirken können, insbesondere in einem zugehörigen Lasttrum, wenn der Riemen für ein Riemengetriebe verwendet wird, ist es in der Praxis von Interesse, welche Temperatur der Riemen bei der Verwendung hat. Denn oftmals sind für einen Riemen Temperaturgrenzen vorgesehen, innerhalb der der Riemen ordnungsgemäß Betrieben werden kann. Darüber hinaus kann die Temperatur des Riemens zumindest indirekt über die Belastung und/oder einen Verschleiß des Riemens Aufschluss geben. In der Praxis werden deshalb oftmals Infrarotsensoren in der Nähe eines Riemens angeordnet, um die Temperatur eines Riemens mittels der Infrarotsensoren zu erfassen. In der Praxis wurde jedoch festgestellt, dass Riemen vielfach in staubigen Umgebungsverhältnissen eingesetzt werden, sodass sich eine Staubschicht auf der Rückenseite eines Riemens bilden kann. Diese Staubschicht verhindert jedoch eine verlässliche Erfassung der Temperatur des Riemens mittels eines Infrarotsensors.

Die US 2016/0313186 A1 beschreibt ein System zum Überwachen des Riemenzustands in einer riemengetriebenen Maschine, wobei das System umfasst: einen elektromagnetischen Sensor, der so konfiguriert ist, dass er die Temperatur eines Antriebsriemens misst und ein digitales Ausgangssignal erzeugt, das in einem Sensorgehäuse angeordnet ist, wobei das Sensorgehäuse so konfiguriert ist, dass es den Sensor angrenzend an den Riemen positioniert, und eine Ausleseeinheit in Verbindung mit dem Sensor, die so konfiguriert ist, dass sie von dem Sensor empfangene Sensordaten einem Benutzer über eine Anzeige anzeigt.

Die DE 10 2015 108 079 A1 beschreibt eine Schaltung, die umfasst: ein als kapazitives mikroelektromechanisches System implementiertes Thermometer (MEMS-Thermometer), das eine auslenkbare Membran und eine Erfassungselektrode umfasst, wobei die auslenkbare Membran ausgelegt ist, einen Kapazitätswert basierend auf einer Temperatur der auslenkbaren Membran einzustellen.

Der Erfindung liegt deshalb die Aufgabe zugrunde, einen Riemen bzw. ein System bereitzustellen, mit dem eine möglichst robuste Temperaturmessung auch in staubigen Umgebungsverhältnissen möglich ist.

Gemäß einem ersten Aspekt der Erfindung wird die Aufgabe gelöst durch einen Riemen mit den Merkmalen des Anspruchs 1. Vorgesehen ist also ein Riemen, der ein Basismaterial, in das Festigkeitsträger eingebettet sind, und eine Sensoreinheit aufweist, die in das Basismaterial eingebettet ist. Die Sensoreinheit weist ein elektrisches Widerstandsbauelement, ein elektrisches Kapazitätsbauelement und ein elektrisches Induktivitätsbauelement auf. Das Widerstandsbauelement ist als ein temperaturabhängiges und mit dem Basismaterial verbundenes Widerstandsbauelement ausgebildet, sodass ein elektrischer Widerstand des Widerstandsbauelements in Abhängigkeit von einer Temperatur des Basismaterials des Riemens bestimmt ist. Die Bauelemente der Sensoreinheit sind zu einer elektrischen Schwingkreisschaltung gekoppelt, sodass eine zugehörige Resonanzfrequenz in Abhängigkeit von dem elektrischen Widerstand des Widerstandsbauelements bestimmt ist und die Temperatur des Basismaterials des Riemens zumindest indirekt repräsentiert. Das elektrische Induktivitätsbauelement ist zum drahtlosen Empfang einer ersten elektromagnetischen Welle ausgebildet, um elektrische Energie zur Anregung der Schwingkreisschaltung zu empfangen. Das elektrische Induktivitätsbauelement ist außerdem zum Erzeugen und/oder Aussenden einer zweiten elektromagnetischen Welle mit der Resonanzfrequenz ausgebildet.

Die Bauelemente der Sensoreinheit, also das elektrische Widerstandsbauelement, das elektrische Kapazitätsbauelement und das elektrische Induktivitätsbauelement, sind zu der elektrischen Schwingkreisschaltung gekoppelt. Das elektrische Widerstandsbauelement kann auch als elektrischer Widerstand bezeichnet sein und/oder ausgebildet sein. Das elektrische Kapazitätsbauelement kann auch als elektrische Kapazität bezeichnet und/oder ausgebildet sein. Das elektrische Induktivitätsbauelement kann auch als elektrische Induktivität bezeichnet und/oder ausbildet sein. Die Bauelemente der Sensoreinheit können in einer Parallelschaltung oder in einer Serienschaltung miteinander gekoppelt sein, um die Schwingkreisschaltung zu bilden. Jedes der Bauelemente der Sensoreinheit kann einteilig oder mehrteilig ausgebildet sein.

Das elektrische Induktivitätsbauelement ist zum drahtlosen Empfang der ersten elektromagnetischen Welle ausgebildet. Die erste elektromagnetische Welle kann vorzugsweise als eine Welle aus gekoppelten elektrischen und magnetischen Feldern verstanden werden. Die erste elektromagnetische Welle kann auch als erste Welle bezeichnet werden. Die erste elektromagnetische Welle hat vorzugsweise eine Frequenz zwischen 300 MHz und 30 GHz. Mittels der ersten elektromagnetischen Welle kann elektrische Energie an das elektrische Induktivitätsbauelement und somit an die Sensoreinheit übertragen werden. Mit einer empfangenen elektrischen Energie wird die Schwingkreisschaltung der Sensoreinheit angeregt. In der Schwingkreisschaltung entsteht dadurch eine elektrische Welle mit einer Resonanzfrequenz, die durch die genannten Bauelemente der Sensoreinheit bestimmt ist. Die Resonanzfrequenz ist deshalb insbesondere von dem elektrischen Widerstand des Widerstandsbauelements abhängig. Der Widerstand des Widerstandsbauelements ist wiederrum von der zugehörigen Temperatur abhängig. Das Widerstandsbauelement ist als ein temperaturabhängiges Widerstandsbauelement ausgebildet und mit dem Basismaterial des Riemens verbunden. Hierbei handelt es sich vorzugsweise um eine stoffschlüssige Verbindung zu dem Basismaterial, sodass die Temperatur des Widerstandsbauelements durch die Temperatur des Basismaterials des Riemens bestimmt ist. Daraus resultiert, dass der elektrische Widerstand des Widerstandsbauelements in Abhängigkeit von einer Temperatur des Basismaterials des Riemens bestimmt ist. Von dem Widerstand ist wiederum die Resonanzfrequenz der elektrischen Welle in der Schwingkreisschaltung abhängig, so dass die Resonanzfrequenz ebenfalls von der Temperatur des Basismaterials des Riemens abhängt. Schließlich folgt daraus, sodass eine Temperatur des Basismaterials des Riemens zumindest indirekt durch die Resonanzfrequenz repräsentiert ist.

Mit Hilfe der elektrischen Welle in der Schwingkreisschaltung ist das elektrische Induktivitätsbauelement zum Erzeugen und Aussenden einer zweiten elektromagnetischen Welle mit der Resonanzfrequenz ausgebildet. Die zweite elektromagnetische Welle kann auch als zweite Welle bezeichnet sein. Die zweite elektromagnetische Welle kann vorzugsweise als eine Welle aus gekoppelten elektrischen und magnetischen Feldern verstanden werden. Die zweite elektromagnetische Welle kann von einem Empfänger empfangen werden, der ein hierauf basiertes Signal einer Auswertevorrichtung zuführt, die zur Ermittlung der Temperatur basierend auf dem genannten Signal ausgebildet ist.

Der Riemen bietet also den Vorteil, dass eine in das Basismaterial des Riemens eingebettete Sensoreinheit kontaktlos mit elektrischer Energie versorgt werden kann, und dass die Sensoreinheit zum Aussenden der zweiten elektromagnetischen Welle ausgebildet ist, um Temperaturinformationen kontaktlos an einen Empfänger zu senden. Der Riemen bietet deshalb die Möglichkeit, dass besonders wartungsarm und zugleich störgrößenrobust auf die Temperatur des Riemens geschlossen werden kann. Dies gilt insbesondere durch mögliche Störungen durch eine Verstaubung des Riemens.

Das Basismaterial ist vorzugsweise von Gummimaterial oder Polyurethan gebildet. Es ist jedoch auch möglich, dass das Basismaterial von einem anderen Kunststoffmaterial gebildet ist. Vorzugsweise ist das Basismaterial elektrisch isolierend ausgebildet. Außerdem kann es vorgesehen sein, dass das Basismaterial von einer Mischung gebildet ist, die zumindest Gummimaterial oder Polyurethan aufweist.

Die erste elektromagnetische Welle und die zweite elektromagnetische Welle können sehr ähnlich sein, jedoch können sie sich unterscheiden. So kann die zweite elektromagnetische Welle durch eine Verstimmung der Schwingkreisschaltung mittels des Widerstandsbauelements erzeugt werden, wobei die Schwingkreisschaltung von der ersten elektromagnetischen Welle angeregt wird. Die Resonanzfrequenz der Schwingkreisschaltung bzw. der elektrischen Welle in der Schwingkreisschaltung wird durch das temperaturabhängige Widerstandsbauelement verändert, sodass die Resonanzfrequenz der zweiten elektromagnetischen Welle nicht mit der Frequenz der ersten elektromagnetischen Welle übereinstimmt, sondern temperaturabhängig verändert ist. Die Resonanzfrequenz einer elektrischen Welle in der Schwingkreisschaltung entspricht vorzugsweise der Resonanzfrequenz der zweiten elektromagnetischen Welle. Die Resonanzfrequenz repräsentiert zumindest indirekt die Temperatur des Basismaterials des Riemens. Mit anderen Worten kann die Resonanzfrequenz zumindest indirekt über die Temperatur des Basismaterials des Riemens Auskunft geben. Die tatsächliche Temperatur des Basismaterials des Riemens kann beispielsweise basierend auf einer erfassten Resonanzfrequenz der zweiten elektromagnetischen Welle und einer vorbestimmten Ableichtabelle, die absolute Temperaturen des Basismaterials des Riemens zu entsprechenden Resonanzfrequenzen repräsentiert, ermittelt werden. In Abhängigkeit der tatsächlich erfassten Resonanzfrequenz kann also mittels der Abgleichtabelle auf die tatsächliche Temperatur des Basismaterials des Riemens geschlossen werden.

Da die Sensoreinheit in das Basismaterial des Riemens eingebettet ist, kann mittels der eingebetteten Sensoreinheit auf die innere Temperatur des Riemens besonders einfach und zugleich genau geschlossen werden. Darüber hinaus kann die Erfassung berührungslos und störgrößenrobust erfolgen. Hierzu wird auf die vorangegangenen Erläuterungen verwiesen.

Besonders bevorzugt ist die Sensoreinheit vollständig in das Basismaterial eingebettet. Dadurch wird effektiv verhindert, dass die Sensoreinheit durch mechanische, äußere Einflüsse auf den Riemen zerstört wird. Vielmehr ist sie durch das Basismaterial des Riemens geschützt. Es ist aber auch möglich, dass die Sensoreinheit zumindest teilweise in das Basismaterial eingebettet ist. So kann die Sensoreinheit beispielsweise derart teilweise in das Basismaterial eingebettet sein, sodass zumindest ein Teil der Sensoreinheit an einer Riemenrückseite des Riemens angeordnet ist. Dabei ist es bevorzugt vorgesehen, dass zumindest das temperaturabhängige Widerstandsbauelement vollständig in das Basismaterial des Riemens eingebettet ist. Dadurch wird effektiv gewährleistet, dass besonders zuverlässig auf die Temperatur des Basismaterials des Riemens geschlossen werden kann.

Auch in der vorangegangenen und der folgenden Erläuterung auf eine Sensoreinheit im Riemen Bezug genommen wird, soll damit eine Mehrzahl von derartigen Sensoreinheiten im Riemen nicht ausgeschlossen sein. Vielmehr kann es vorgesehen sein, dass der Riemen mehrere derartige Sensoreinheiten aufweist, die jeweils in das Basismaterial des Riemens eingebettet sind. Die Sensoreinheiten können in Umfangsrichtung des Riemens voneinander beabstandet angeordnet sein.

Eine vorteilhafte Ausgestaltung des Riemens zeichnet sich dadurch aus, dass das elektrische Widerstandsbauelement als ein Heißleiter oder als ein Kaltleiter ausgebildet ist. So hat es sich als vorteilhaft herausgestellt, wenn das elektrische Widerstandsbauelement als ein Thermistor ausgebildet ist. Heißleiter und Kaltleiter gehören zu der Gruppe der Thermistoren. Der Heißleiter kann auch als NTC-Widerstandselement oder als NTC-Widerstand bezeichnet sein. Der Kaltleiter kann auch als PTC-Widerstandsbauelement oder als PTC-Widerstand bezeichnet sein. Sofern das elektrische Widerstandsbauelement als ein Heißleiter ausgebildet ist, ist der Temperaturkoeffizient vorzugsweise zwischen 50 und 1000. Der Temperaturkoeffizient repräsentiert dabei den Quotienten des elektrischen Widerstands in Ohm zu der Temperatur in Grad Celsius.

Eine weitere vorteilhafte Ausgestaltung des Riemens zeichnet sich dadurch aus, dass die Bauelemente der Sensoreinheit in Serie geschaltet sind oder parallel geschaltet sind. Die Schwingkreisschaltung kann deshalb zur Erzeugung eines Serienschwingkreises bzw. zur Erzeugung eines parallelen Schwingkreises ausgebildet sein.

Eine weitere vorteilhafte Ausgestaltung des Riemens zeichnet sich dadurch aus, dass das Widerstandsbauelement auf einen Riemenquerschnitt des Riemens bezogen zumindest im Wesentlichen mittig im Basismaterial des Riemens eingebettet ist. Durch die entsprechende mittige Anordnung des Widerstandsbauelements kann die Kerntemperatur des Riemens besonders präzise und/oder störgrößenrobust erfasst werden. Die Kerntemperatur eines Riemens ist in der Praxis besonders interessant. Denn der Riemen kann an der äußeren Schicht oftmals gekühlt werden, wohin der Kern des Riemens für eine Kühlung nur schwer erreichbar ist. Bei besonders hoher Temperatureinstrahlung und/oder bei einer besonders hohen Beanspruchung des Riemens kann es deshalb zu einer besonders hohen Temperatur im Kern des Riemens kommen. Die Kerntemperatur ist deshalb besonders interessant zur Beurteilung des Zustands und/oder einer Restlebensdauer des Riemens. In dem das Widerstandsbauelement zumindest im Wesentlichen mittig im Basismaterial des Riemens eingebettet ist, kann deshalb auf die besonders interessante Kerntemperatur des Riemens mittels der Sensoreinheit geschlossen werden.

Eine weitere vorteilhafte Ausgestaltung des Riemens zeichnet sich dadurch aus, dass das Basismaterial des Riemens zum Transmittieren der ersten elektromagnetischen Welle und der zweiten elektromagnetischen Welle ausgebildet ist. Die beiden Wellen können das Basismaterial also durchdringen, um mit dem elektrischen Induktivitätsbauelement in Wechselwirkung zu kommen. Das elektrische Induktivitätsbauelement kann durch eine Spule, insbesondere eine Ferritspule, und/oder durch ein Bauelement mit einer Mehrzahl von Windungen ausgebildet sein. Das elektrische Induktivitätsbauelement kann insbesondere auch nach Art einer spulenförmigen Antenne ausgebildet sein.

Die Bauelemente der Sensoreinheit zur Bildung der Schwingkreisschaltung sind vorzugsweise derart ausgebildet, dass eine Resonanzfrequenz der zweiten elektromagnetischen Welle derart bestimmt ist, dass die zweite elektromagnetische Welle einer besonders geringen Dämpfung durch das Basismaterial des Riemens unterliegt. Entsprechendes kann für die erste elektromagnetische Welle gelten. So kann die Frequenz der ersten elektromagnetischen Welle derart gewählt sein, dass das Basismaterial eine besonders geringe Dämpfung der ersten elektromagnetischen Welle hervorruft.

Eine weitere vorteilhafte Ausgestaltung des Riemens zeichnet sich dadurch aus, dass das Basismaterial des Riemens eine Schicht mit ferrimagnetischem Material aufweist. Das ferrimagnetische Material kann zur Bündelung von mit einer elektromagnetischen Welle entstehenden, elektromagnetischen Feldern beitragen, was den Einfluss von Störgrößen auf die entsprechende elektromagnetische Welle reduziert. Dies kann in analoger Weise sowohl für die erste elektromagnetische Welle als auch für die zweite elektromagnetische Welle gelten. Die Schicht mit ferrimagnetischem Material im Basismaterial des Riemens trägt deshalb dazu bei, dass die drahtlose Übertragung der beiden elektromagnetischen Wellen besonders störgrößenrobust erfolgen kann. Vorzugsweise ist eine Schicht im Basismaterial des Riemens von ferrimagnetischem Material gebildet. Dadurch kann eine besonders effektive Bündelung gewährleistet werden.

Eine vorteilhafte Ausgestaltung des Riemens zeichnet sich dadurch aus, dass ferrimagnetisches Material in das Basismaterial des Riemens eingemischt und/oder eingebettet ist. So kann das ferrimagnetische Material verteilt in das Basismaterial eingemischt sein. Es ist aber auch möglich, dass das ferrimagnetische Material als eine Schicht in das Basismaterial eingebettet ist. In beiden Fällen ist das ferrimagnetische Material von dem Basismaterial umgeben, sodass das ferrimagnetische Material von dem Basismaterial mechanisch geschützt ist. Eine weitere vorteilhafte Ausgestaltung des Riemens zeichnet sich dadurch aus, dass ferrimagnetisches Material an einem Riemenrücken des Riemens angeordnet ist. Das ferrimagnetische Material kann dabei eine stoffschlüssige Verbindung zu dem Basismaterial des Riemens aufweisen. So kann das ferrimagnetische Material beispielsweise auf den Riemenrücken des Riemens aufgeklebt sein. Dies erlaubt eine besonders einfache Herstellung des Riemens mit dem ferrimagnetischen Material an dem Riemenrücken. Auf die zuvor erläuterten Vorteile und/oder Effekte des ferrimagnetischen Materials wird in analoger Weise verwiesen.

Eine weitere vorteilhafte Ausgestaltung des Riemens zeichnet sich dadurch aus, dass die Sensoreinheit und/oder der Riemen als solches batteriefrei ausgebildet ist bzw. sind. Die Sensoreinheit kann ausgebildet sein, nur durch von der ersten elektromagnetischen Welle übertragenden Energie gespeist zu sein. Die Sensoreinheit kann deshalb auch als eine passive Sensoreinheit bezeichnet sein. In dem die Sensoreinheit und/oder der Riemen batteriefrei ausgebildet sind, ist der Riemen besonders wartungsarm. Denn ein Austausch einer anderenfalls notwendigen Batterie zum Betreiben der Sensoreinheit ist nicht notwendig.

Eine weitere vorteilhafte Ausgestaltung des Riemens zeichnet sich dadurch aus, dass mindestens eines der Bauelemente der Sensoreinheit als ein gedrucktes Bauelement ausgebildet ist. Es ist jedoch auch möglich, dass jedes Bauelement der Sensoreinheit als ein entsprechendes, gedrucktes Bauelement ausgebildet ist. Das Widerstandsbauelement, das Kapazitätsbauelement und/oder das Induktivitätsbauelement können also gedruckt ausgebildet sein. Das jeweilige Bauelement kann dabei flexibel und/oder dehnbar ausgebildet sein. Bei der Herstellung des Riemens erlaubt die gedruckte Ausgestaltung eines Bauelements der Sensoreinheit eine besonders einfache Einbettung der Sensoreinheit in das Basismaterial. Außerdem kann insbesondere bei der gedruckten Ausgestaltung des Widerstandsbauelements besonders einfach gewährleistet werden, dass das Widerstandsbauelement mit dem Basismaterial stoffschlüssig verbunden ist, um so die Temperatur des Widerstandsbauelements durch die Temperatur des Basismaterials zu bestimmen und/oder zu prägen.

Eine weitere vorteilhafte Ausgestaltung des Riemens zeichnet sich dadurch aus, dass die Sensoreinheit als eine integrierte Schaltung, insbesondere als eine gedruckte, integrierte Schaltung, ausgebildet ist. Die als integrierte Schaltung ausgebildete Sensoreinheit kann bei der Herstellung des Riemens besonders einfach in das noch nicht vulkanisierte Basismaterial eingebettet werden. Bei der Vulkanisation des Basismaterials während der Fertigstellung des Riemens findet die mögliche stoffschlüssige Verbindung zwischen der Sensoreinheit und dem Basismaterial statt. Insbesondere kann das Widerstandsbauelement der Sensoreinheit derart mittels der integrierten Schaltung angeordnet sein, dass das Basismaterial eine stoffschlüssige Verbindung zu dem Widerstandsbauelement herstellt. Dadurch kann eine besonders verlässliche Übertragung der Temperatur des Basismaterials auf das Widerstandsbauelement gewährleistet werden.

Eine weitere vorteilhafte Ausgestaltung des Riemens zeichnet sich dadurch aus, dass mehrere Sensoreinheiten in das Basismaterial eingebettet sind. Jede der Sensoreinheiten kann gemäß dem ersten Aspekt der Erfindung, eine der hierzu als vorher erläuterten, vorteilhaften Ausgestaltungen und/oder mit einem der als vorteilhaft erläuterten Merkmale ausgebildet sein. Für jedes der weiteren Sensoreinheiten wird deshalb auf die vorangegangenen Erläuterungen, bevorzugten Merkmale, Effekte und/oder Vorteile in analoger Weise verwiesen, wie sie für den Riemen bereits erläutert worden sind. Die mehreren Sensoreinheiten können insbesondere in Umfangsrichtung voneinander beabstandet angeordnet sein. Somit kann die Temperatur des Riemens an unterschiedlichen Stellen, insbesondere an unterschiedlichen Stellen in Umfangsrichtung, erfasst werden. Dies ist insbesondere dann von Vorteil, wenn der Riemen eine große Umfangslänge aufweist. Dies kann beispielsweise bei Förderbändern der Fall sein.

Gemäß einem zweiten Aspekt der Erfindung wird die eingangs genannte Aufgabe gelöst durch ein System mit den Merkmalen des Anspruchs 12. Vorgesehen ist also ein System, das einen Riementrieb mit einem Riemen aufweist. Der Riemen ist dabei gemäß dem ersten Aspekt der Erfindung und/oder gemäß einer der zugehörigen, vorteilhaften Ausgestaltungen ausgebildet. Für den Riemen wird deshalb auf die vorangegangen, vorteilhaften Erläuterungen, bevorzugten Merkmale, Effekte und/oder Vorteile, wie sie im Zusammenhang mit dem bereits erläuterten Riemen erörtert worden sind, zumindest in analoger Weise Bezug genommen. Das System weist außerdem eine Auswertevorrichtung mit einer Transmittereinheit auf. Die Transmittereinheit ist zum Empfang der zweiten elektromagnetischen Welle ausgebildet, die die Temperatur des Basismaterials des Riemens zumindest indirekt repräsentiert. Die Auswertevorrichtung ist zur Ermittlung eines Temperatursignals, das eine absolute Temperatur des Riemens repräsentiert, basierend auf der empfangenen, zweiten elektromagnetischen Welle ausgebildet.

Die absolute Temperatur kann mittels einer Abgleichtabelle oder mittels einer hinterlegten Formel ermittelt werden. Die Abgleichtabelle bzw. die hinterlegte Formel kann von der Auswertevorrichtung gespeichert werden. Außerdem kann die Auswertevorrichtung dazu konfiguriert sein, das Temperatursignal mittels der Abgleichtabelle und/oder der hinterlegten Formel sowie basierend auf der Temperatur, die von der zweiten elektromagnetischen Welle zumindest repräsentiert wird, zu ermitteln. Zur Speicherung der Abgleichtabelle und/oder der Formel kann die Auswertevorrichtung ein Speichermedium aufweisen.

Die zweite elektromagnetische Welle wird vorzugsweise drahtlos und/oder berührungslos mittels der Transmittereinheit empfangen. Die Transmittereinheit kann also beabstandet zu dem Riemen angeordnet sein. Mit anderen Worten kann die Transmittereinheit berührungslos zum Riemen angeordnet sein.

Der Riementrieb kann eine Antriebsrolle und eine Umlenkrolle aufweisen. Der Riementrieb kann auch noch auf weitere Rollen, insbesondere mindestens eine Umlenkrolle, aufweisen. Jede der Rollen kann zumindest Abschnittsweise von dem Riemen umschlungen sein. Jede oder mindestens eine der Rollen kann auch als eine Umlenkscheibe ausgebildet sein.

Das System gemäß dem zweiten Aspekt der Erfindung bietet den Vorteil, dass die zweite elektromagnetische Welle berührungslos von der Sensoreinheit an die Transmittereinheit übertragen werden kann, und das basierend auf der Temperatur, die durch die zweite elektromagnetische Welle repräsentiert wird, auf die absolute Temperatur des Riemens geschlossen werden kann. Dazu wird mittels der Auswertevorrichtung ein Temperatursignal ermittelt, dass die absolute Temperatur des Riemens repräsentiert. Dieses Temperatursignal kann sodann weiter verarbeitet werden. Insbesondere können basierend auf dem Temperatursignal weitere Werte ermittelt werden, die Aufschluss auf den Zustand und/oder die Lebensdauer des Riemens erlauben bzw. dies repräsentieren.

Eine vorteilhafte Ausgestaltung des Systems zeichnet sich dadurch aus, dass das Temperatursignal eine absolute Kerntemperatur des Riemens repräsentiert. Die absolute Temperatur ist also durch die Kerntemperatur bestimmt. Die Kerntemperatur ist in der Praxis besonders interessant, da sie einen besonders präzisen Aufschluss über den Zustand des Riemens erlaubt.

Eine weitere vorteilhafte Ausgestaltung des Systems zeichnet sich dadurch aus, dass der Riemen von mehreren Rollen des Riementriebs derart umgelenkt und/oder umschlungen ist, dass der Riemen einen Zugtrum aufweist, wobei die Transmittereinheit berührungsfrei an dem Zugtrum des Riemens angeordnet ist. Die Transmittereinheit weist also keine direkte Berührung zu dem Zugtrum des Riemens auf. Insbesondere kann die Transmittereinheit in einem vorbestimmten Abstand zu dem Zugtrum angeordnet sein. Der vorbestimmte Abstand kann an die jeweiligen in der Praxis vorliegenden Umstände angepasst sein. Die berührungsfreie Anordnung der Transmittereinheit am Zugtrum gewährleistet eine verlässliche Erfassung der zweiten elektromagnetischen Welle. Dadurch können elektrische Störgrößen auf ein Minimum reduziert werden, was eine besonders präzise Ermittlung des Temperatursignals erlaubt. In der Praxis wurde außerdem festgestellt, dass der Zugtrum oftmals unter einer besonders hohen Zugspannung stehen kann, sodass im Zugtrum nicht selten die höchsten Temperaturen im Kern des Riemens auftreten. Die berührungsfreie Anordnung der Transmittereinheit an dem Zugtrum des Riemens gewährleistet deshalb die Erfassung der Temperatur in einem Abschnitt des Riemens, der für eine verlässliche Bestimmung des Zustands des Riemens von hohem Interesse ist.

Eine weitere vorteilhafte Ausgestaltung des Riemens zeichnet sich dadurch aus, dass die Transmittereinheit zur Erzeugung und Aussendung der ersten elektromagnetischen Welle ausgebildet ist. In diesem Zusammenhang wird auf die Erläuterungen bezüglich der ersten elektromagnetischen Welle verwiesen, wie sie für den Riemen gemäß dem ersten Aspekt erörtert worden sind. Indem die Transmittereinheit auch die erste elektromagnetische Welle erzeugen bzw. aussenden kann, ist eine besonders kompakte Ausgestaltung des Systems möglich. Dies gilt insbesondere für die Auswertevorrichtung mit der Transmittereinheit.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine vorteilhafte Ausgestaltung des Riemens in einer schematischen Seitenansicht.
- Figur 2: zeigt einen Querschnitt des Riemens aus Fig. 1 in einer schematischen Ansicht.
- Figur 3: zeigt den schematischen Aufbau einer Sensoreinheit in einer vorteilhaften Ausgestaltung.
- Figur 4: zeigt eine vorteilhafte Ausgestaltung eines Abschnitts eines Riemens in einer schematischen halbtransparenten Draufsicht.
- Figur 5: zeigt eine vorteilhafte Ausgestaltung eines Systems in einer schematischen Darstellung.
- Figur 6: zeigt eine vorteilhafte Ausgestaltung eines mittleren Stroms in einer Messschaltung einer Transmittereinheit des Systems.
- Figur 7: zeigt einen Ausschnitt einer vorteilhaften Ausgestaltung eines Riemens in einer schematischen Längsschnittansicht.

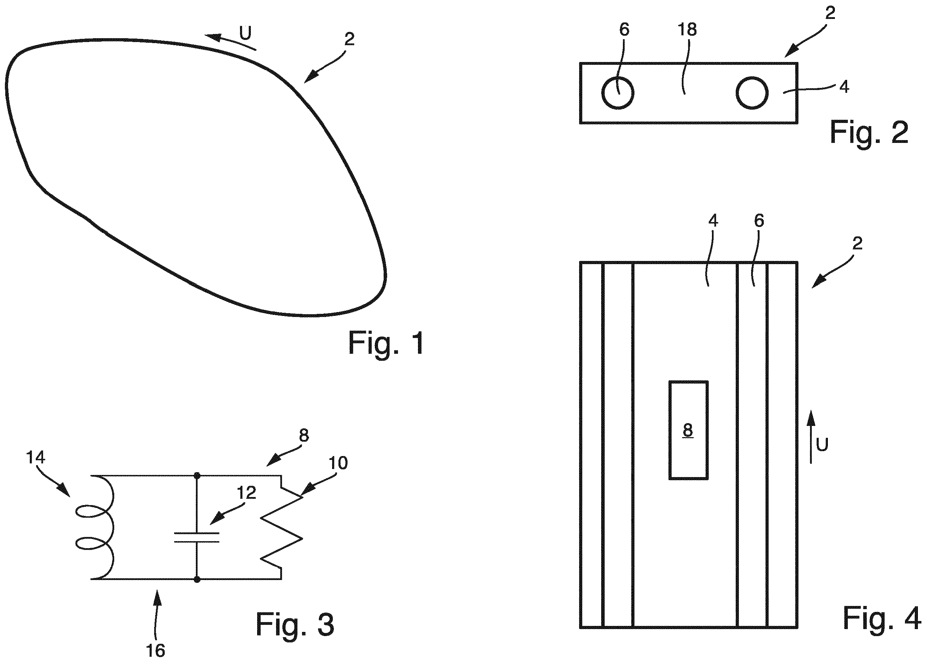

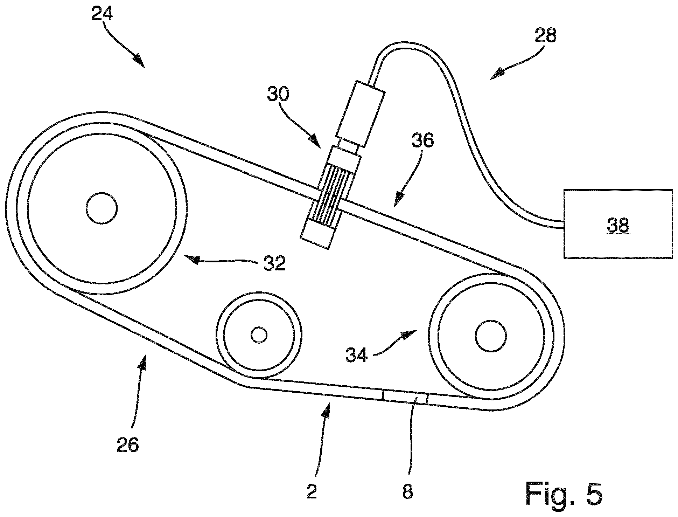

In der Figur 1 ist eine beispielhafte Ausgestaltung eines Riemens 2 in einer schematischen Seitenansicht wiedergegeben. Bei dem Riemen 2 handelt es sich um einen in einer Umfangsrichtung U ringförmig umlaufend ausgebildeten Riemen 2. Dieser Riemen 2 kann deshalb dazu ausgebildet sein, um für einen Riementrieb 26, wie dieser beispielhaft in der Figur 5 gezeigt ist, verwendet zu werden.

In der Figur 2 ist der Querschnitt des Riemens 2 beispielhaft und schematisch dargestellt. Der Riemen 2 weist ein Basismaterial 4 auf, das vorzugsweise aus Gummimaterial oder Polyurethanmaterial ist. In das Basismaterial 4 sind Festigkeitsträger 6 eingebettet. Die Festigkeitsträger 6 können beispielsweise von sogenannten Stahldrähten und/oder Kunststoff-Corden gebildet sein. Die Festigkeitsträger 6 können miteinander verbunden sein. So können die Festigkeitsträger 6 beispielsweise von einem durchgängigen, in Umfangsrichtung U schraubenförmig gewendelten Cord gebildet sein, der in das Basismaterial 4 eingebettet ist. Grundsätzlich können auch Gewebe (nicht dargestellt) Festigkeitsträger von Riemen 2 bilden.

Außerdem weist der Riemen 2 eine Sensoreinheit 8 auf, die in das Basismaterial 4 eingebettet ist. In diesem Zusammenhang wird auf die Figuren 3 und 4 verwiesen. Die Sensoreinheit 8 weist ein elektrisches Widerstandsbauelement 10, ein elektrisches Kapazitätsbauelement 12 und ein elektrisches Induktivitätsbauelement 14 auf. Die genannten Bauelemente 10, 12, 14 der Sensoreinheit 8 bilden eine Schwingkreisschaltung 16. Dabei können die Bauelemente 10, 12, 14 parallel geschaltet sein. Es ist jedoch auch möglich, dass die Bauelemente 10, 12, 14 in Serie geschaltet sind. Bei einer Parallelschaltung kann von der Schwingkreisschaltung 16 ein Parallelschwingkreis gebildet sein. Bei einer Serienschaltung der Bauelemente 10, 12, 14 kann von der Schwingkreisschaltung 16 ein Serienschwingkreis gebildet sein. Die Schwingkreisschaltung 16 ist zumindest ein Teil der Sensoreinheit 8. Besonders bevorzugt wird die Sensoreinheit 8 jedoch von der Schwingkreisschaltung 16 vollständig gebildet.

In der Figur 4 ist ein Abschnitt des Riemens 2 in einer schematischen Draufsicht dargestellt. Aus dieser Darstellung ist ebenfalls zu erkennen, dass die Festigkeitsträger 6 in das Basismaterial 4 eingebettet sind. Außerdem geht aus der Darstellung der Figur 4 hervor, dass die Sensoreinheit 8 in das Basismaterial 4 eingebettet ist. In der Figur 4 ist die Sensoreinheit 8 der Einfachheit halber durch einen rechteckigen Kasten schematisch dargestellt.

Bei dem elektrischen Widerstandsbauelement 10 der Sensoreinheit 8 handelt es sich um ein temperaturabhängiges Widerstandsbauelement 10, beispielsweise ausgebildet als ein Heißleiter oder als ein Kaltleiter. Bei dem Heißleiter kann es sich beispielsweise um einen NTC-Widerstand handeln. Das Widerstandsbauelement 10 ist mit dem Basismaterial 4 verbunden. Dies kann beispielsweise dadurch erreicht werden, dass das Widerstandsbauelement 10 zumindest im Wesentlichen vollständig außenseitig in stoffschlüssiger Verbindung mit dem Basismaterial 4 ist. Dies gewährleistet, dass eine Temperatur des Basismaterials 4 des Riemens 2 die Temperatur des Widerstandsbauelements 10 der Sensoreinheit 8 bestimmt. Ein elektrischer Widerstand des Widerstandsbauelements 10 ist deshalb in Abhängigkeit von der Temperatur des Basismaterials 4 des Riemens 2 bestimmt.

Das elektrische Widerstandsbauelement 10 ist ein Teil der Schwingkreisschaltung 16, sodass eine zugehörige Resonanzfrequenz einer elektrischen Welle, die sich in der Schwingkreisschaltung 16 ausbreiten kann, in Abhängigkeit von dem elektrischen Widerstand des Widerstandsbauelements 10 bestimmt ist. Die Resonanzfrequenz repräsentiert deshalb zumindest indirekt eine Temperatur des Widerstandsbauelements 10 und deshalb zumindest indirekt eine Temperatur des Basismaterials 4 des Riemens 2. Die Temperatur des Basismaterials 4 des Riemens 2 kann auch als die Temperatur des Riemens 2 bezeichnet und/oder verstanden werden.

Das elektrische Induktivitätsbauelement 14 der Schwingkreisschaltung 16 ist zum drahtlosen Empfang einer ersten elektromagnetischen Welle ausgebildet, um elektrische Energie zur Anregung der Schwingkreisschaltung 16 zu empfangen. Die Schwingkreisschaltung 16 kann also elektrische Energie über die erste elektromagnetische Welle und mittels des elektrischen Induktivitätsbauelements 14 empfangen. Dadurch wird die Schwingkreisschaltung 16 zur Schwingung mit einer elektrischen Welle angeregt, die die zugehörige Resonanzfrequenz aufweist. Dies wiederum führt dazu, dass das elektrische Induktionsbauelement 14 eine zweite elektromagnetische Welle mit der Resonanzfrequenz aussendet. Diese wird also auch von dem elektrischen Induktionsbauelement 14 erzeugt. Die Frequenzen der ersten und zweiten elektromagnetischen Welle können sehr ähnlich oder sogar gleich sein. Es ist jedoch zumeist der Fall, dass die beiden elektromagnetischen Wellen zumindest phasenverschoben sind. Mit der Erzeugung einer elektromagnetischen Welle entsteht ein elektromagnetisches Wechselfeld. Dies gilt auch für die erste elektromagnetische Welle. Indem mittels des elektrischen Induktionsbauelements eine zweite elektromagnetische Welle erzeugt wird, wird das elektromagnetische Wechselfeld beeinflusst und/oder verändert. Das Aussenden der zweiten elektromagnetischen Welle kann deshalb synonym für die Veränderung des elektromagnetischen Wechselfelds aufgefasst und/oder verstanden werden. Die zweite elektromagnetische Welle bzw. das veränderte elektromagnetische Wechselfeld kann mittels eines Empfängers erfasst werden, wobei die erfasste, zweite elektromagnetische Welle bzw. die erfasste Veränderung des elektromagnetischen Wechselfelds die Temperatur des Basismaterials 4 des Riemens 2 zumindest indirekt repräsentiert.

Mittels der in das Basismaterial 4 eingebetteten Sensoreinheit 8 bietet der Riemen 2 die Möglichkeit, dass per Funk bzw. drahtlos und zugleich besonders präzise auf die Temperatur des Riemens 2 geschlossen werden kann. Dabei ist die Sensoreinheit 8 vorzugsweise batteriefrei ausgebildet. Sie kann deshalb auch als passive Sensoreinheit 8 bezeichnet sein. Dadurch ist der Riemen 2 besonders wartungsarm. Denn eine Wartung der Sensoreinheit 8 zum Auswechseln einer Batterie entfällt.

Darüber hinaus ist es mittels der Sensoreinheit 8 möglich, die Kerntemperatur des Riemens 2 zu erfassen. Denn die Sensoreinheit 8 ist in das Basismaterial 4 des Riemens 2 eingebettet. Eine besonders präzise Erfassung der Kerntemperatur des Riemens 2 ist insbesondere dann möglich, wenn das Widerstandsbauelement 10 auf einen Riemenquerschnitt 18 des Riemens 2 bezogen zumindest im Wesentlichen mittig im Basismaterial 4 des Riemens 2 eingebettet ist. Denn in diesem Fall bestimmt die Kerntemperatur die Temperatur des Widerstandsbauelements 10. Die übrigen Bauelemente 12, 14 der Sensoreinheit 8 sind nicht notwendigerweise mittig im Basismaterial 4 anzuordnen. So kann es beispielsweise vorgesehen sein, dass das elektrische Induktivitätsbauelement 14 an einer äußeren Schicht im Basismaterial 4 des Riemens 2 angeordnet ist. Das elektrische Induktivitätsbauelement 14 kann beispielsweise durch eine spulenförmige Antenne gebildet sein.

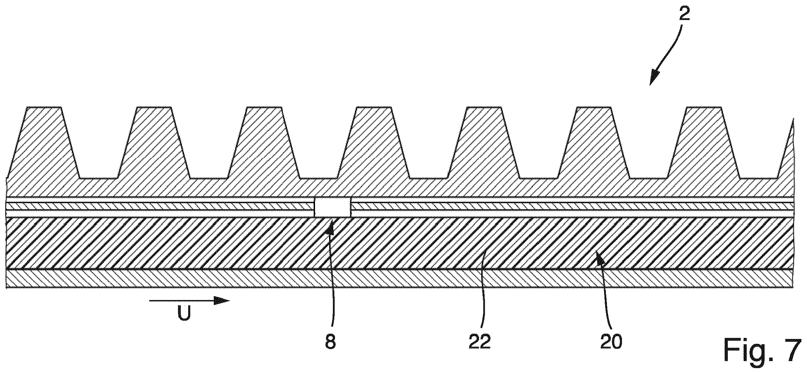

In der Figur 7 ist eine weitere Ausgestaltung eines Abschnitts des Riemens 2 in einer seitlichen Querschnittsdarstellung schematisch dargestellt. Der Riemen 2 ist dabei als ein Zahnriemen ausgebildet. Dies ist jedoch nicht zwingend notwendig. Der Riemen 2 weist eine sich in Umfangsrichtung U erstreckende Schicht 20 mit ferrimagnetischem Material 22 auf. Diese Schicht 20 kann dabei zumindest im Wesentlichen ausschließlich von dem ferrimagnetischen Material 22 gebildet sein oder in dieser Schicht 20 verteilt eingebettet sein. Die Schicht 20 kann eine innere oder äußere Schicht des Riemens 2 bilden, beispielsweise als eine Schicht am Rücken des Riemens 2. Es ist jedoch auch möglich, dass das ferrimagnetische Material 22 in das Basismaterial 4 des Riemens 2 eingemischt ist, sodass die Schicht 20 aus einer Mischung des ferrimagnetischen Materials 22 und des Basismaterials 4 gebildet ist. Das ferrimagnetische Material 22 trägt zur Bündelung von einem mit einer elektromagnetischen Welle entstehenden, elektromagnetischen Feld bei. Dadurch wird dieses Feld weniger durch äußere Einflüsse gestört, was eine präzise Übermittlung der Temperatur des Basismaterials 4 über die zweite elektromagnetische Welle mit der entsprechenden (temperaturabhängigen) Resonanzfrequenz mittels der Sensoreinheit 8 gewährleistet oder zumindest unterstützt. Die Sensoreinheit 8 ist rein schematisch in der Figur 7 dargestellt. Eines oder jedes der Bauelemente 10, 12, 14 kann sich dabei in Umfangsrichtung U des Riemens 2 erstrecken.

In der Figur 5 ist eine vorteilhafte Ausgestaltung eines Systems 24 schematisch dargestellt. Das System 24 weist einen Riementrieb 26 mit einem Riemen 2 auf. Bei dem Riemen 2 handelt es sich vorzugsweise um den zuvor erläuterten Riemen 2. Der Riementrieb 26 weist vorzugsweise mehrere Rollen 32, 34 auf. Der Riemen 2 ist derart angeordnet, dass der Riemen 2 jede der Rollen 32, 34 zumindest teilweise umschlingt. Eine der Rollen 32, 34 ist vorzugsweise als Antriebsrolle ausgebildet. Die mindestens eine andere Rolle 34 kann jeweils als Umlenkroll 34 ausgebildet sein.

Das System 24 weist außerdem eine Auswertevorrichtung 28 mit einer Transmittereinheit 30 auf. Die Transmittereinheit 30 ist vorzugsweise in einem vorbestimmten Abstand und/oder kontaktlos zu dem Riemen 2 angeordnet. Die Transmittereinheit 30 ist außerdem zum Empfang der zweiten elektromagnetischen Welle ausgebildet, die von dem elektrischen Induktivitätsbauelement 14 der Sensoreinheit 16 des Riemens 2 erzeugt und/oder ausgesendet werden kann. Die zweite elektromagnetische Welle weist dabei eine Resonanzfrequenz auf, die eine Temperatur des Basismaterials 4 des Riemens 2 zumindest indirekt repräsentiert.

Die Auswertevorrichtung 28 ist zur Ermittlung eines Temperatursignals, das eine absolute Temperatur des Riemens 2 repräsentiert, basierend auf der empfangenen, zweiten elektromagnetischen Welle ausgebildet. Wird also von der Transmittereinheit 30 der Auswertevorrichtung 28 die zweite elektromagnetische Welle empfangen, kann die Auswertevorrichtung 28 basierend hierauf das Temperatursignal ermitteln. Dabei kann von der Auswertevorrichtung 28 eine Abgleichtabelle und/oder eine vorbestimmte Formel gespeichert sein und/oder verwendet werden. Die Abgleichtabelle kann dabei absolute Temperaturen für den Riemen 2 zu möglichen, zugehörigen Frequenzen bzw. Resonanzfrequenzen der zweiten elektromagnetischen Welle abbilden. Entsprechendes kann durch die mathematische Formel hinterlegt sein. Zur Ermittlung des Temperatursignals kann die Auswertevorrichtung konfiguriert sein, die Abgleichtabelle bzw. die Formel zusammen mit der Resonanzfrequenz der empfangenen, zweiten elektromagnetischen Welle auszuwerten und basierend auf dem Ergebnis das Temperatursignal zu bestimmen, dass die absolute Temperatur des Riemens 2 repräsentiert.

Bereits zuvor wurde erläutert, dass eine elektromagnetische Welle ein elektromagnetisches Wechselfeld verursacht. Dies gilt sowohl für die erste elektromagnetische Welle als auch für die zweite elektromagnetische Welle. Das aus den beiden Wellen resultierende, elektromagnetische Wechselfeld kann dabei zu einer höheren Leistungsaufnahme an einer Einheit führen, die zum Aussenden der ersten elektromagnetischen Welle ausgebildet ist. In einer vorteilhaften Ausgestaltung ist vorgesehen, dass die Transmittereinheit 30 der Auswertevorrichtung 28 zum Erzeugen und Aussenden der ersten elektromagnetischen Welle ausgebildet ist. Dazu kann die Transmittereinheit 30 eine elektrische Spule, insbesondere eine Ferritspule, aufweisen. Die Transmittereinheit 30 kann also auch zum Erzeugen eines zugehörigen, elektromagnetischen Wechselfelds ausgebildet sein. Durch die Überlagerung dieses elektromagnetischen Wechselfelds mit dem elektromagnetischen Wechselfeld, das mit der zweiten elektromagnetischen Welle entsteht, wird eine höhere elektrische Leistungsaufnahme an der Transmittereinheit 30 hervorgerufen. Da die elektromagnetischen Wellen und die zugehörigen Wechselfelder in Wechselwirkung zueinander stehen, entspricht der Empfang der zweiten elektromagnetischen Welle gleichermaßen der Rückwirkung der sich überlagerten Wechselfelder auf die Transmittereinheit 30. Deshalb basiert auch die erhöhte Leistungsaufnahme zumindest indirekt auf der empfangenen, zweiten elektromagnetischen Welle, oder umgekehrt. Selbst wenn die Auswertevorrichtung 28 also die Ermittlung des Temperatursignals zumindest auch basierend auf der erhöhten Leistungsaufnahme der Transmittereinheit 30 ausführt, basiert das ermittelte Temperatursignal zumindest indirekt auch auf der empfangenen, zweiten elektromagnetischen Welle.

Von dem Riemen 2 des Riementriebs 26 ist vorzugsweise zumindest ein Zugtrum 36 zwischen zwei Rollen 32, 34 ausgebildet. Die Transmittereinheit 30 ist vorzugsweise berührungsfrei und/oder in einem vorbestimmten Abstand zu dem Zugtrum 36 angeordnet. Der vorbestimmte Abstand ist vorzugsweise derart klein gewählt, dass eine möglichst geringe Störung eines elektromagnetischen Wechselfelds zwischen der Transmittereinheit 30 und der Sensoreinheit 8 auftritt. Der Zugtrum 36 unterliegt in der Praxis außerdem einer besonders geringen Schwingung, so dass eine präzise Anordung der Transmittereinheit in Bezug auf den Riemen 2 hier besonders gut gewährleistet werden kann.

Wie aus der Figur 5 außerdem zu entnehmen ist, kann die Auswertevorrichtung 28 eine Anzeigeeinheit 38 aufweisen, mit der die Auswertevorrichtung 28 das Temperatursignal oder ein davon abhängiges Signal optisch zur Anzeige bringt. Die Auswertevorrichtung 28 kann jedoch alternativ oder ergänzend eine Signalschnittstelle (nicht dargestellt) aufweisen, mit der die Auswertevorrichtung 28 das Temperatursignal zur Verfügung stellen kann.

Aus der Figur 5 ist darüber hinaus schematisch zu entnehmen, dass bei einem Betrieb des Riementriebs 26 ein Umlauf des Riemens 2 derart erfolgt, dass die Sensoreinheit 8 periodisch an der Transmittereinheit 30 vorbeigeführt wird. Die Erfassung der zweiten elektromagnetischen Welle mittels der Transmittereinheit 30 erfolgt deshalb ebenfalls in periodischen Zeitabständen.

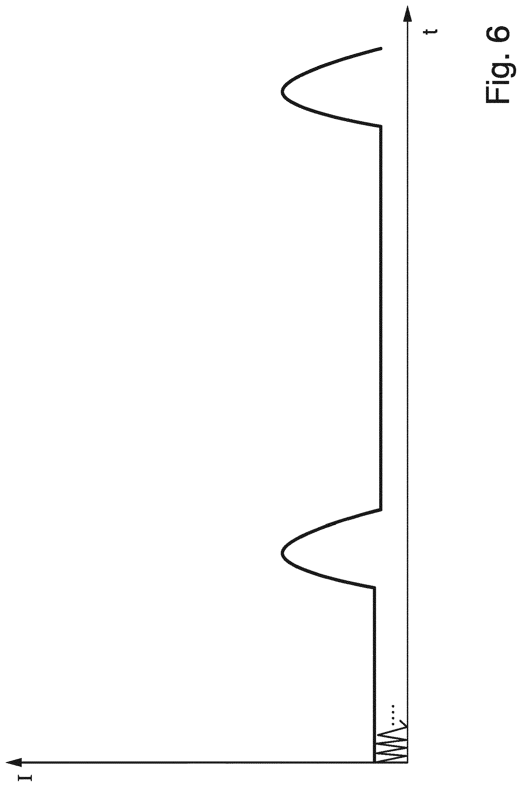

In diesem Zusammenhang wird auf die Figur 6 verwiesen. In dem dort dargestellten Graph wird die Intensität I der erfassten, zweiten elektromagnetischen Welle über die Zeit t abgebildet dargestellt. Dabei kann der ober Graph einen mittleren Maximalwert der zweiten, elektromagnetischen Welle darstellen. Die zweite elektromagnetische Welle ist im Ansatz in der linken unteren Ecke dargestellt. Sofern die Sensoreinheit 8 nicht in unmittelbarer Nähe zu der Transmittereinheit 30 ist, ist die von der Transmittereinheit 30 erfasste Intensität I konstant. Nur wenn die Sensoreinheit 8 in unmittelbarer Nähe zu der Transmittereinheit 30 kommt, erhöht sich die Intensität I des von der Transmittereinheit 30 erfassten Signals, was in der Figur 6 durch entsprechende parabelförmige Signalabschnitte repräsentiert ist. Vorzugsweise werden nur die diesen Zeitabschnitten erfassten Signale bzw. die Resonanzfrequenz dieser Signale zur Temperaturermittlung herangezogen. Aus dem Graph in Fig. 6 lässt sich jedoch auch auf die Leistungsaufnahme der Transmittereinheit 30 schließen. Denn beim vorbeiführen der Sensoreinheit 8 an der Transmittereinheit 30 kommt es zu der zuvor erläuterten Überlagerung der Wechselfelder, was zu einem entsprechenden neuen, gemeinsamen Wechselfeld führt. Dies verursacht eine erhöhte Leistungsaufnahme der Transmittereinheit 30, die durch die parabelförmigen Abschnitte des Graphs ebenfalls repräsentiert ist. Die Auswerteeinheit kann außerdem zur Erfassung einer Geschwindigkeit des Riemens 2, insbesondere basierend auf der Periodendauer zwischen den parabelförmigen Signalabschnitten, ausgebildet sein.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste (Teil der Beschreibung)

- U: Umfangsrichtung

- 2: Riemen
- 4: Basismaterial
- 6: Festigkeitsträger
- 8: Sensoreinheit
- 10: Widerstandsbauelement
- 12: Kapazitätsbauelement
- 14: Induktivitätsbauelement
- 16: Schwingkreisschaltung
- 18: Riemenquerschnitt
- 20: Schicht
- 22: ferrimagnetisches Material
- 24: System
- 26: Riementrieb
- 28: Auswertevorrichtung
- 30: Transmittereinheit
- 32: Rolle
- 34: Rolle
- 36: Zugtrum
- 38: Anzeige

## Patentansprüche

1. Riemen (2), aufweisend:
ein Basismaterial (4), in das Festigkeitsträger (6) eingebettet sind, und
eine Sensoreinheit (8), die in das Basismaterial (4) eingebettet ist,
wobei die Sensoreinheit (8) ein elektrisches Widerstandsbauelement (10), ein elektrisches Kapazitätsbauelement (12) und ein elektrisches Induktivitätsbauelement (14) aufweist,
wobei das Widerstandsbauelement (10) als ein temperaturabhängiges und mit dem Basismaterial (4) verbundenes Widerstandsbauelement (10) ausgebildet ist, so dass ein elektrischer Widerstand des Widerstandsbauelements (10) in Abhängigkeit von einer Temperatur des Basismaterials (4) des Riemens (2) bestimmt ist,
wobei die Bauelemente (10, 12, 14) der Sensoreinheit (8) zu einer elektrischen Schwingkreisschaltung (16) gekoppelt sind, so dass eine zugehörige Resonanzfrequenz in Abhängigkeit von dem elektrischen Widerstand des Widerstandsbauelements (10) bestimmt ist und die Temperatur des Basismaterials (4) des Riemens (2) zumindest indirekt repräsentiert,
wobei das elektrische Induktivitätsbauelement (14) zum drahtlosen Empfang einer ersten elektromagnetischen Welle ausgebildet ist, um elektrische Energie zur Anregung der Schwingkreisschaltung (16) zu empfangen, und
wobei das elektrische Induktivitätsbauelement (14) zum Erzeugen und Aussenden einer zweiten elektromagnetischen Welle mit der Resonanzfrequenz ausgebildet ist.

2. Riemen (2) nach dem vorhergehenden Anspruch, **dadurch gekennzeichnet, dass** das elektrische Widerstandsbauelement (10) als ein Heißleiter oder als ein Kaltleiter ausgebildet ist.

3. Riemen (2) nach einem der vorhergehenden Ansprüche, **dadurch gekennzeichnet, dass** die Bauelemente (10, 12, 14) der Sensoreinheit (8) in Serie geschaltet sind oder parallel geschaltet sind.

4. Riemen (2) nach einem der vorhergehenden Ansprüche, **dadurch gekennzeichnet, dass** das Widerstandsbauelement (10) auf einen Riemenquerschnitt des Riemens (2) bezogen zumindest im Wesentlichen mittig im Basismaterial (4) des Riemens (2) eingebettet ist.

5. Riemen (2) nach einem der vorhergehenden Ansprüche, **dadurch gekennzeichnet, dass** das Basismaterial (4) des Riemens (2) zum Transmittieren der ersten und zweiten elektromagnetischen Welle ausgebildet ist.

6. Riemen (2) nach einem der vorhergehenden Ansprüche, **dadurch gekennzeichnet, dass** das Basismaterial (4) des Riemens (2) eine Schicht mit ferrimagnetischem Material (22) aufweist.

7. Riemen (2) nach dem vorhergehenden Anspruch, **dadurch gekennzeichnet, dass** das ferrimagnetische Material (22) in das Basismaterial (4) eingemischt und/oder eingebettet ist, oder dass das ferrimagnetische Material (22) an einem Riemenrücken des Riemens (2) angeordnet ist.

8. Riemen (2) nach einem der vorhergehenden Ansprüche, **dadurch gekennzeichnet, dass** die Sensoreinheit (8) batteriefrei ausgebildet ist.

9. Riemen (2) nach einem der vorhergehenden Ansprüche, **dadurch gekennzeichnet, dass** mindestens eines der Bauelemente der Sensoreinheit (8) als ein gedrucktes Bauelement ausgebildet ist.

10. Riemen (2) nach einem der vorhergehenden Ansprüche, **dadurch gekennzeichnet, dass** die Sensoreinheit (8) als ein integrierte Schaltung, insbesondere eine gedruckte integrierte Schaltung, ausgebildet ist.

11. Riemen (2) nach einem der vorhergehenden Ansprüche, **dadurch gekennzeichnet, dass** mehrere Sensoreinheiten (8) gemäß der Sensoreinheit (8) in das Basismaterial (4) eingebettet sind.

12. System (24), aufweisend:
einen Riementrieb (26) mit einem Riemen (2) nach einem der vorhergehenden Ansprüche, und
eine Auswertevorrichtung (28) mit einer Transmittereinheit (30),
wobei die Transmittereinheit (30) zum Empfang der zweiten elektromagnetischen Welle ausgebildet ist, die die Temperatur des Basismaterials (4) des Riemens (2) zumindest indirekt repräsentiert, und
wobei die Auswertevorrichtung (28) zur Ermittlung eines Temperatursignals, das eine absolute Temperatur des Riemens (2) repräsentiert, basierend auf der empfangenen, zweiten elektromagnetischen Welle ausgebildet ist.

13. System (24) nach dem vorhergehenden Anspruch, **dadurch gekennzeichnet, dass** das Temperatursignal eine Kerntemperatur des Riemens (2) repräsentiert.

14. System (24) nach einem der vorhergehenden Ansprüche 12 bis 13, **dadurch gekennzeichnet, dass** der Riemen (2) von mehreren Rollen des Riementriebs (26) derart umgelenkt ist, dass der Riemen (2) einen Zugtrum (36) aufweist, wobei die Transmittereinheit (30) berührungsfrei an dem Zugtrum (36) des Riemens (2) angeordnet ist.

15. System (24) nach einem der vorhergehenden Ansprüche 8 bis 10, **dadurch gekennzeichnet, dass** die Transmittereinheit (30) zum Erzeugen und Aussenden der ersten elektromagnetischen Welle ausgebildet ist.

## Claims

1. Belt (2), comprising:
a base material (4), in which reinforcing elements (6) are embedded, and
a sensor unit (8), which is embedded in the base material (4),
wherein the sensor unit (8) has an electrical resistance component (10), an electrical capacitance component (12) and an electrical inductance component (14),
wherein the resistance component (10) is designed as a temperature-dependent resistance component (10) connected to the base material (4), so that an electrical resistance of the resistance component (10) is determined in dependence on a temperature of the base material (4) of the belt (2),
wherein the components (10, 12, 14) of the sensor unit (8) are coupled to an electrical oscillating circuit (16), so that an associated resonant frequency is determined in dependence on the electrical resistance of the resistance component (10) and at least indirectly represents the temperature of the base material (4) of the belt (2),
wherein the electrical inductance component (14) is designed for wirelessly receiving a first electromagnetic wave, in order to receive electrical energy for the excitation of the oscillating circuit (16), and
wherein the electrical inductance component (14) is designed for generating and emitting a second electromagnetic wave with the resonant frequency.

2. Belt (2) according to the preceding claim, **characterized in that** the electrical resistance component (10) is designed as an NTC thermistor or as a PTC thermistor.

3. Belt (2) according to one of the preceding claims, **characterized in that** the components (10, 12, 14) of the sensor unit (8) are connected in series or are connected in parallel.

4. Belt (2) according to one of the preceding claims, **characterized in that** the resistance component (10) is embedded at least substantially in the middle of the base material (4) of the belt (2), with respect to a belt cross section of the belt (2).

5. Belt (2) according to one of the preceding claims, **characterized in that** the base material (4) of the belt (2) is designed for transmitting the first and second electromagnetic waves.

6. Belt (2) according to one of the preceding claims, **characterized in that** the base material (4) of the belt (2) has a layer with ferrimagnetic material (22).

7. Belt (2) according to the preceding claims, **characterized in that** the ferrimagnetic material (22) is mixed into and/or embedded in the base material (4), or **in that** the ferrimagnetic material (22) is arranged on a belt back of the belt (2).

8. Belt (2) according to one of the preceding claims, **characterized in that** the sensor unit (8) is designed without a battery.

9. Belt (2) according to one of the preceding claims, **characterized in that** at least one of the components of the sensor unit (8) is designed as a printed component.

10. Belt (2) according to one of the preceding claims, **characterized in that** the sensor unit (8) is designed as an integrated circuit, in particular a printed integrated circuit.

11. Belt (2) according to one of the preceding claims, **characterized in that** a number of sensor units (8) according to the sensor unit (8) are embedded in the base material (4).

12. System (24), comprising:
a belt drive (26) with a belt (2) according to one of the preceding claims, and
an evaluation device (28) with a transmitter unit (30),
wherein the transmitter unit (30) is designed for receiving the second electromagnetic wave, which at least indirectly represents the temperature of the base material (4) of the belt (2), and
wherein the evaluation device (28) is designed for determining a temperature signal, which represents an absolute temperature of the belt (2), on the basis of the received, second electromagnetic wave.

13. System (24) according to the preceding claims, **characterized in that** the temperature signal represents a core temperature of the belt (2).

14. System (24) according to one of the preceding Claims 12 to 13, **characterized in that** the belt (2) is deflected by a number of rollers of the belt drive (26) in such a way that the belt (2) has a tight side (36), wherein the unit (30) is arranged contactless on the tight side (36) of the belt (2).

15. System (24) according to one of the preceding Claims 8 to 10, **characterized in that** the transmitting unit (30) is designed for generating and emitting the first electromagnetic wave.

## Revendications

1. Courroie (2), comprenant :
un matériau de base (4), dans lequel des supports de renforcement (6) sont noyés, et
une unité de détection (8) qui est noyée dans le matériau de base (4),
l'unité de détection (8) étant un composant électrique résistif (10), un composant électrique capacitif (12) et un composant électrique inductif (14),
le composant résistif (10) étant conçu comme un composant résistif (10) qui dépend de la température et qui est relié au matériau de base (4) de sorte qu'une résistance électrique du composant résistif (10) soit déterminée en fonction d'une température du matériau de base (4) de la courroie (2)
les composants (10, 12, 14) de l'unité de détection (8) étant couplés de façon à former un circuit électrique résonnant (16) de sorte qu'une fréquence de résonance associée soit déterminée en fonction de la résistance électrique du composant résistif (10) et représente au moins indirectement la température du matériau de base (4) de la courroie (2),
le composant électrique inductif (14) étant pour recevoir sans fil une première onde électromagnétique afin de recevoir de l'énergie électrique destinée à exciter le circuit résonnant (16), et
le composant électrique inductif (14) étant conçu pour générer et émettre une deuxième onde électromagnétique à la fréquence de résonance.

2. Courroie (2) selon la revendication précédente, **caractérisée en ce que** le composant électrique résistif (10) est réalisé sous la forme d'une thermistance CTN ou d'une thermistance CTP.

3. Courroie (2) selon l'une des revendications précédentes, **caractérisée en ce que** les composants (10, 12, 14) de l'unité de détection (8) sont montés en série ou en parallèle.

4. Courroie (2) selon l'une des revendications précédentes, **caractérisée en ce que** le composant résistif (10) est noyé au moins sensiblement au milieu du matériau de base (4) de la courroie (2) sur la base d'une section transversale de la courroie (2).

5. Courroie (2) selon l'une des revendications précédentes, **caractérisée en ce que** le matériau de base (4) de la courroie (2) est conçu pour transmettre les première et deuxième ondes électromagnétiques.

6. Courroie (2) selon l'une des revendications précédentes, **caractérisée en ce que** le matériau de base (4) de la courroie (2) comporte une couche pourvue de matériau ferrimagnétique (22).

7. Courroie (2) selon la revendication précédente, **caractérisée en ce que** le matériau ferrimagnétique (22) est mélangé et/ou noyé dans le matériau de base (4), ou **en ce que** le matériau ferrimagnétique (22) est disposé au dos de la courroie (2).

8. Courroie (2) selon l'une des revendications précédentes, **caractérisée en ce que** l'unité de détection (8) est conçue sans pile.

9. Courroie (2) selon l'une des revendications précédentes, **caractérisée en ce que** l'un au moins des composants de l'unité de détection (8) est réalisé sous la forme d'un composant imprimé.

10. Courroie (2) selon l'une des revendications précédentes, **caractérisée en ce que** l'unité de détection (8) est réalisée sous la forme d'un circuit intégré, notamment d'un circuit intégré imprimé.

11. Courroie (2) selon l'une des revendications précédentes, **caractérisée en ce qu'**une pluralité d'unités de détection (8) sont noyées dans le matériau de base (4) conformément à l'unité de détection (8).

12. Système (24), comprenant :
un entraînement par courroie (26) pourvu d'une courroie (2) selon l'une des revendications précédentes, et
un dispositif d'évaluation (28) pourvu d'une unité de transmission (30),
l'unité de transmission (30) étant conçue pour recevoir la deuxième onde électromagnétique qui représente au moins indirectement la température du matériau de base (4) de la courroie (2), et
le dispositif d'évaluation (28) étant conçu pour déterminer un signal de température qui représente une température absolue de la courroie (2) sur la base de la deuxième onde électromagnétique reçue.

13. Système (24) selon la revendication précédente, **caractérisé en ce que** le signal de température représente une température à cœur de la courroie (2).

14. Système (24) selon l'une des revendications précédentes 12 à 13, **caractérisé en ce que** la courroie (2) est déviée par une pluralité de rouleaux de l'entraînement par courroie (26) de telle sorte que la courroie (2) comporte un brin de traction (36), l'unité de transmission (30) étant disposée sans contact sur le brin de traction (36) de la courroie (2).

15. Système (24) selon l'une des revendications 8 à 10 précédentes, **caractérisé en ce que** l'unité de transmission (30) est conçue pour générer et transmettre la première onde électromagnétique.
